(19) **Europäisches Patentamt European Patent Office Office européen des brevets**

(11) **EP 2 902 762 B1**

(12) **FASCICULE DE BREVET EUROPEEN**

(45) Date de publication et mention
de la délivrance du brevet:
**11.07.2018 Bulletin 2018/28**

(51) Int Cl.:
*G01K 17/20* (2006.01)   *G01K 17/08* (2006.01)
*G01W 1/17* (2006.01)   *F24F 11/30* (2018.01)
*F24F 130/00* (2018.01)   *F24F 130/10* (2018.01)

(21) Numéro de dépôt: **14305137.3**

(22) Date de dépôt: **30.01.2014**

(54) **Procédé de détermination d'une signature thermique d'un bâtiment par la mesure de la température au fil du temps, et dispositif associé**

Verfahren zur Bestimmung einer Wärmesignatur eines Gebäudes durch Temperaturmessung im Zeitverlauf, und entsprechende Vorrichtung

Method for determining a heat signature of a building by measuring the temperature over time, and related device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**05.08.2015 Bulletin 2015/32**

(73) Titulaire: **Qivivo**
**44000 Nantes (FR)**

(72) Inventeurs:
• **Suire, Adrien**
**44700 ORVAULT (FR)**

• **Le Hoangan, Pierre**
**35000 RENNES (FR)**

(74) Mandataire: **Nony**
**11 rue Saint-Georges**
**75009 Paris (FR)**

(56) Documents cités:
**EP-A2- 0 165 899    WO-A1-2011/117356**
**FR-A1- 2 506 937**

**Description**

**1. Domaine de l'invention**

L'invention concerne un procédé de détermination d'une signature thermique appliquée à un bâtiment. L'invention concerne plus particulièrement le cas où un thermomètre mesure la température intérieure et la transmet au fil du temps à une unité centrale qui analyse les variations de ce paramètre.

**2. Art antérieur**

De nos jours, il est de plus en plus important d'économiser l'énergie et notamment de surveiller le chauffage des bâtiments afin de leur procurer une température adaptée à leurs occupants. Il est connu des thermostats fournissant une valeur de température au niveau de certaines pièces et commandant l'allumage d'une chaudière lorsque la température mesurée descend en-dessous d'un certain seuil. Un système de chauffage peut comporter un détecteur de présence pour mettre en marche le chauffage lorsqu'une présence est détectée. L'inertie thermique d'un système de chauffage provoque une lente montée en température, de sorte que dans un premier temps, les occupants du local sont soumis au froid. Pour éviter cela, il existe des systèmes permettant d'anticiper la présence humaine. Un système particulièrement simple consiste à doter les thermostats d'une horloge destinée à appliquer une certaine consigne de chauffage lors de plages horaires où le local est censé abriter des occupants. De cette façon, le système de chauffage se met en position « confort » avant l'arrivée des occupants et bascule en position « inoccupé » après le départ des occupants.

Une autre façon d'économiser l'énergie pour chauffer un local consiste à améliorer son isolation. Des normes appliquées sur les constructions neuves imposent une résistance thermique minimale aux matériaux utilisés. Ce coefficient, généralement désigné par la lettre « R » exprime la capacité d'un matériau à ralentir le transfert de chaleur réalisé par conduction, son unité est le $m^2.K/W$. Plus la valeur de ce coefficient est élevée, plus le matériau est isolant et meilleure est l'isolation globale du bâtiment. Dans le cas de constructions anciennes, il importe de calculer en détail ses caractéristiques thermiques de façon à améliorer son isolation dans des postes où celle-ci est déficiente. Par exemple, si les murs sont épais mais que la toiture n'est pas isolée, la majeure partie de la déperdition thermique s'effectue par le toit et l'isolation doit prioritairement s'effectuer sur ce poste. Les éléments du bâtiment générant des déperditions d'énergie peuvent être caractérisés sous la forme d'un ensemble de valeurs constituant une véritable signature thermique du bâtiment. A l'aide de la connaissance de ces valeurs, il est possible de définir une stratégie d'amélioration de l'isolation consistant à prioriser les travaux d'isolation sur les postes où l'augmentation de la résistance thermique serait la plus importante. D'autres éléments non liés à la conduction thermique permettent d'améliorer le bilan thermique (« thermal évaluation » en langue anglo-saxonne), comme la pose d'une ventilation double flux, ou des fenêtres de toit dirigées vers le sud pour améliorer la pénétration des rayons du soleil.

Ces mesures d'amélioration des performances thermiques du bâtiment peuvent également prendre en compte l'environnement climatique du bâtiment. L'orientation du bâtiment joue un rôle important dans des régions tempérées, par exemple l'isolation du mur exposé au nord doit être renforcée par rapport à celle du mur exposé au sud. Le niveau de pluviométrie et la présence de vent dominant sont également des paramètres à prendre en compte pour déterminer la capacité du bâtiment à maintenir une température confortable pour ces occupants. Ces éléments doivent être pris en compte pour évaluer les travaux prioritaires à effectuer en vue d'une meilleure isolation d'un bâtiment.

De nos jours, un bilan thermique peut être effectué pour un bâtiment, en vue par exemple de sa vente. Ce bilan thermique fournit une notation sous la forme d'une valeur numérique et d'une note permettant d'évaluer l'isolation d'un bâtiment. Le bilan thermique comporte également le cas échéant, des travaux d'amélioration. Ces mesures sont basées sur une évaluation moyenne des déperditions thermiques d'un bâtiment. Voici en moyenne, les déperditions mesurées sur un bâtiment :

39 % des déperditions s'effectuent par les murs,
27 % par le toit,
17 % par la cheminée,
6% par l'ensemble des ouvertures (portes et fenêtres) et,
6% par le sol.

Mais ces valeurs sont approximatives et doivent être affinées par des mesures effectuées sur le bâtiment à évaluer. Un problème à résoudre est donc de produire une signature thermique fiable d'un bâtiment afin de pouvoir conseiller des mesures pour améliorer les performances thermiques du bâtiment.

La performance d'un bâtiment peut également être évaluée par la quantité d'énergie destinée à le chauffer. Cette quantité d'énergie rapportée à des caractéristiques physiques du bâtiment (superficie, nombre de niveaux, nombre et dimensions des ouvertures, type de toit, ...) permet d'évaluer sa performance thermique et éventuellement de préconiser d'améliorer ses performances thermiques. Mais, ce mode de calcul ne prend pas en compte les habitudes des occupants alors que ce facteur est notamment important dans l'utilisation du chauffage. Il existe donc un réel besoin d'améliorer les techniques pour préconiser des travaux en vue de l'amélioration des performances thermiques. A titre d'exemple, les documents EP0165899 A2, FR2506937 A1 et WO2011117356 A1 divulguent des procédés de calcul d'une signature thermique d'un bâtiment en analysant pendant une longue période des données relatives à la température intérieure, la température extérieure, la vitesse du vent, l'ensoleillement ou le taux d'activité du système de chauffage.

## 3. Objectifs de l'invention

La présente invention apporte une solution qui ne présente pas les inconvénients décrits plus haut, tout en proposant les avantages listés ci-dessous.

## 4. Exposé de l'invention

Selon un aspect fonctionnel, l'invention concerne un procédé de calcul d'une signature thermique d'un bâtiment selon la revendication 1.

De cette manière, il est possible de calculer une signature thermique d'un bâtiment en installant un simple thermomètre dans un bâtiment et en récupérant des informations d'environnement climatiques.

Selon un premier mode de réalisation, les éléments capables d'influer sur la température dudit bâtiment sont pris dans le groupe d'éléments composé de la température extérieure, la vitesse du vent, l'orientation du vent, l'ensoleillement, mesure de la pression atmosphérique, le degré d'humidité, la présence d'occupants dans le bâtiment et le fonctionnement d'un système de chauffage.

Selon un mode particulier de réalisation, l'étape d'analyse de l'évolution des mesures de température consiste notamment à analyser conjointement les variations de température extérieure et de température intérieure pendant une période de temps au cours de laquelle les valeurs représentatives des autres éléments varient en-dessous d'un certain seuil et se situe en pleine nuit, l'étape de calcul déterminant à partir des variations pendant la dite période un coefficient caractérisant l'influence de la température extérieure sur la température intérieure.

Selon un mode particulier de réalisation, l'étape d'analyse de l'évolution des mesures de température consiste notamment à analyser conjointement les variations de température intérieure et la vitesse du vent pendant une période de temps se situant en début de nuit et au cours de laquelle les valeurs représentatives des autres éléments varient en-dessous d'un certain seuil, l'étape de calcul déterminant à partir des variations mesurées pendant ladite période un coefficient caractérisant l'influence du vent sur la température intérieure.

Selon un mode particulier de réalisation, l'étape d'analyse de l'évolution des mesures de température consiste notamment à analyser conjointement les variations de température intérieure et l'ensoleillement pendant une période de temps se situant au milieu de la journée et au cours de laquelle les valeurs représentatives des autres éléments varient en-dessous d'un certain seuil, l'étape de calcul déterminant à partir des variations mesurées pendant ladite période un coefficient caractéri-

risant l'influence de l'ensoleillement sur la température intérieure.

Selon un mode particulier de réalisation, l'étape d'analyse de l'évolution des mesures de température consiste notamment à analyser conjointement les variations de température intérieure, l'ensoleillement et la vitesse du vent pendant une période de temps au cours de laquelle les valeurs représentatives des autres éléments varient en-dessous d'un certain seuil et au cours de laquelle l'absence d'occupant est détectée, l'étape de calcul déterminant à partir des variations mesurées pendant ladite période une matrice d'état caractérisant l'influence de l'ensoleillement et du vent sur la température intérieure.

Selon un mode particulier de réalisation, le procédé comporte une étape d'introduction de données relatives à l'usage dudit bâtiment et une étape d'émission de recommandations en fonction des données d'usages introduites, et de la signature thermique du bâtiment.

Selon un mode particulier de réalisation, l'étape d'émission de recommandations consiste à émettre les recommandations par courrier postal lorsque celles-ci concernent des travaux à effectuer sur ledit bâtiment.

Selon un mode particulier de réalisation, l'étape d'émission de recommandations consiste à émettre les recommandations par message téléphonique lorsque celles-ci concernent au moins une action à effectuer dans le bâtiment au cours des prochaines heures.

Selon un mode particulier de réalisation, une recommandation de remplacer au moins une plage de programmation d'un thermostat de contrôle du système de chauffage du bâtiment par une plage de présence des occupants introduite au cours de l'étape d'introduction est émise lorsque au moins un moment où la température intérieure est maximale se situe en dehors des plages de présence des occupants.

Selon un mode particulier de réalisation, une recommandation de fermer les volets dudit bâtiment est émise lorsque des vents importants sont prévus dans les prochaines heures et lorsque la signature thermique dudit bâtiment indique qu'une façade est sensible aux vents.

Selon un mode particulier de réalisation, une recommandation consistant à avancer le chauffage d'une durée déterminée est émise lorsque l'écart entre la température intérieure et la température extérieure prévue dans les prochaines heures est supérieur à un seuil déterminé.

Selon un mode particulier de réalisation, une recommandation d'ouvrir les volets dudit bâtiment est émise lorsqu'un ensoleillement dépassant un certain seuil est prévu dans les prochaines heures et lorsque la signature thermique signale qu'une façade au moins du bâtiment est sensible aux apports solaires, et que l'écart entre la température extérieure et la température intérieure est inférieur à un certain seuil.

La présente invention concerne également un serveur destiné à déterminer une signature thermique d'un local conçu pour mettre en oeuvre les étapes d'analyse de l'évolution des mesures de température et une étape de calcul de fonctions élémentaires selon l'un quelconque des modes de réalisation listés ci-dessus.

La présente invention concerne également un produit programme d'ordinateur téléchargeable depuis un réseau de communications et/ou stocké sur un support lisible par ordinateur et/ou exécutable par une unité centrale, comprenant des instructions de programme permettant de mettre en oeuvre des étapes de l'un quelconque des modes de réalisation listés ci-dessus.

## 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :

- la figure 1 représente un système de détermination d'une signature thermique associé à un bâtiment selon un exemple préféré de réalisation de l'invention,
- la figure 2 présente un exemple d'ordinogramme des principales étapes permettant de calculer la signature thermique d'un bâtiment et de produire des recommandations,
- la figure 3 présente un schéma séquentiel montrant l'évolution de la température en fonction d'éléments susceptibles d'agir sur cette évolution.

## 6. Description d'un mode de réalisation de l'invention

### 6.1 Principe général

La présente invention concerne un procédé pour calculer une signature thermique d'un bâtiment. Le procédé comprend des étapes concomitantes de mesure et d'enregistrement de l'évolution de la température à l'intérieur dudit bâtiment, et de valeurs représentatives d'éléments capables d'influer sur la température du bâtiment comme par exemple la température extérieure. Les mesures de la température à l'intérieur dudit bâtiment et desdites valeurs représentatives d'éléments capables d'influer sur la température intérieure dudit bâtiment sont indexées à une datation au moins journalière. Puis, l'évolution des mesures de température est analysée pendant une période au

cours de laquelle un nombre minimal de valeurs représentatives d'éléments varient au-dessus d'un certain seuil. Des fonctions élémentaires sont alors calculées pour déterminer la température en fonction desdites valeurs, les étapes d'analyse et de calcul se répètent afin de prendre en compte l'ensemble des éléments, l'ensemble des fonctions déterminant la signature thermique du bâtiment.

La présente invention concerne aussi le serveur apte à produire la signature thermique dudit bâtiment en fonction notamment des mesures effectuées par le thermomètre intelligent, et un programme d'ordinateur comprenant des instructions conçues pour mettre en oeuvre des étapes du procédé.

### 6.2 Description d'un mode de réalisation

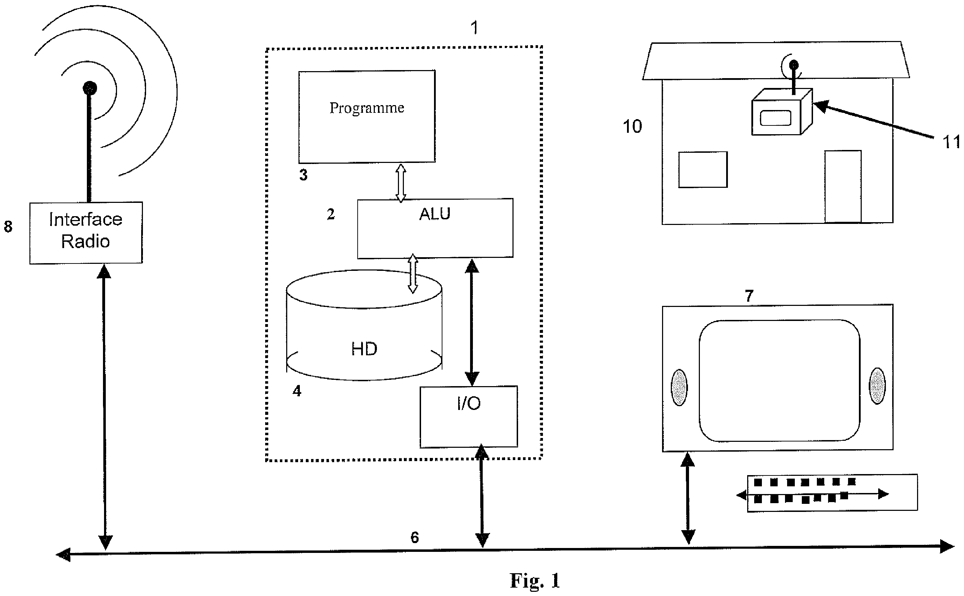

La figure 1 présente les principaux éléments pour la mise en oeuvre du procédé selon un exemple de réalisation de l'invention. Dans un mode préféré de réalisation, un serveur 1 comporte une Unité Centrale 2 destiné à exécuter un programme de calcul de signature thermique mémorisé dans une mémoire programme 3. L'UC 2 est relié à une mémoire de masse 4, typiquement un disque dur pour le stockage d'une base de données de référence et à une interface de communication 5. L'interface 5 est reliée à un réseau bidirectionnel 6 permettant de communiquer avec au moins un autre serveur distant, par exemple celui de la météorologie. Un terminal 7 est de préférence connecté au réseau 6 pour la communication à distance avec le serveur 1. Selon une variante, le terminal 7 peut être à proximité du serveur 1 et se connecter via son interface 5. Le terminal 7 comporte typiquement un écran, un clavier et une liaison avec une imprimante. L'interface 5 est également reliée à un module de communication sans fil 8 pour la communication par onde avec un appareil. Ce module de communication sans fil 8 est de préférence connecté au réseau 6 pour la communication à distance avec le serveur 1. Selon une variante de réalisation, il peut être directement connecté à l'interface 5 du serveur 1. Le module 8 peut être matérialisé par un réseau de communication téléphonique, GSM par exemple, accessible à partir de bornes d'entrées.

Le bâtiment 10 dont on veut calculer la signature thermique contient un thermomètre intelligent 11 appelé « MTO », abrégé de Météo Température Occupation. Sous le terme « bâtiment », on désigne tout local constituant une partie ou la totalité d'un bâtiment, destiné à recevoir un ou plusieurs occupants. Un MTO est un appareil électronique comportant au moins : un thermomètre associé à un convertisseur numérique apte à générer une valeur représentative de la température courante, un module d'émission de ladite valeur sur un réseau sans fil, et une batterie. Le MTO est avantageusement doté d'un afficheur à cristaux liquide affichant pour les occupant du bâtiment la température mesurée. La valeur est émise sans contact, de préférence par radio et reçue par le module de communication sans fil 8 connecté au serveur 1. Le MTO est placé de préférence au milieu du bâtiment 10 dont on veut calculer la signature thermique, ou au moins à un endroit représentant la température dudit bâtiment. Selon un mode préféré de réalisation, la liaison entre le MTO et le serveur 1 est unidirectionnelle.

Selon un autre mode de réalisation, le MTO reçoit des informations d'autres capteurs, tels que : un ou plusieurs détecteurs de présence des occupants du bâtiment, des sondes de température situées dans d'autres pièces et à l'extérieur, une sonde de pression atmosphérique, un anémomètre, un détecteur d'ensoleillement, une liaison avec le moyen de chauffage du bâtiment pour transmettre les conditions de fonctionnement, etc. Il va de soi que ces éléments améliorent l'acquisition des données pour le calcul de la signature mais restent facultatifs, la présente invention n'ayant pas expressément besoin de tels éléments pour être mise en oeuvre. Les informations provenant de ces capteurs additionnels sont récupérées par le MTO et émises avec la valeur de température. L'ensemble des éléments décrits ci-dessus constitue un système d'évaluation permettant de calculer une signature thermique et de produire des recommandations pour améliorer le bilan thermique du bâtiment.

Après avoir présenté les principaux éléments constitutifs de l'invention, nous allons maintenant expliquer comment ceux-ci coopèrent.

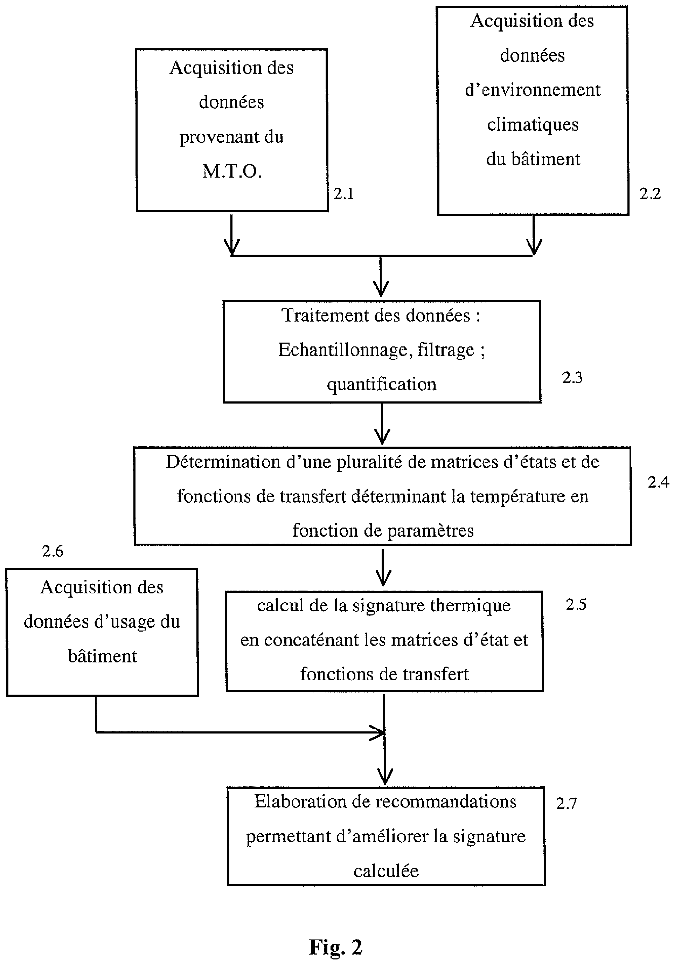

La figure 2 présente sous la forme d'un exemple d'ordinogramme des étapes d'un procédé pour calculer une signature thermique d'un bâtiment et pour produire des recommandations. A l'étape 2.1, le MTO envoie en permanence des mesures de température prise dans le bâtiment 10. Les mesures sont reçues par le module 8 et dans un premier temps, mémorisées dans la mémoire 4. De façon concomitante, à l'étape 2.2, le serveur 1 émet des requêtes vers un ou plusieurs serveurs distants pour rapatrier des informations sur l'environnement climatique du bâtiment 10. Ces informations concernent par exemple :

- la température extérieure,
- la vitesse du vent et sa direction,
- la nature du ciel : soleil, pluie, nuageux, nuit,
- la pluviométrie,...

Selon une variante de réalisation, l'étape 2.2 peut comporter l'émission par des capteurs situés à l'intérieur et/ou à l'extérieur du bâtiment 10, d'informations sur l'environnement climatique. Selon un perfectionnement, ces capteurs sont en communication filaire ou non avec le MTO, de sorte que toutes les informations recueillies sont incorporées dans une trame émises vers l'interface radio 8. Toutes les informations émises par le MTO, les sites distants et les éventuels capteurs additionnels sont associées à une information horaire (dates et heures) et enregistrées chronologiquement dans un tableau inscrit dans la mémoire 4.

Au cours d'une période de temps déterminé, qui est fonction du type de bâtiment, typiquement six semaines pour une maison, le serveur dispose d'un tableau de valeurs indéxées au temps. Au cours de ces semaines, l'analyse s'effectue tous les jours, permettant ainsi à la signature thermique de se calculer progressivement. Les anciennes données sont utilisées pour améliorer la précision des nouvelles données. De sorte qu'à la fin de la première semaine, il est possible de fournir une première signature thermique. Une fois cette période écoulée, le programme de calcul de signature thermique considère qu'il a suffisamment d'éléments pour effectuer le calcul. L'étape d'analyse 2.3 consiste tout d'abord à échantillonner, filtrer et quantifier les données reçues. Au cours de cette étape, les écarts de températures sont calculés.

A noter que le thermomètre intelligent n'a pas besoin d'être relié à la chaudière, ni pour la commander, ni pour savoir si elle est en marche ou non. Cette caractéristique de l'invention est particulièrement avantageuse, le MTO et le serveur 1 peuvent fonctionner tout seul, sans connexion avec la maison. En effet, le programme de calcul de signature analyse les évolutions de la température du bâtiment et en déduit certaines informations lors de laps de temps où un seul paramètre évolue, ainsi il calcule l'influence de ce paramètre sur la température à l'intérieur du domicile.

Typiquement, au cours d'une nuit sans vent, et à une heure où il n'y a pas d'activité humaine à l'intérieur du bâtiment, la température intérieure ne varie qu'en fonction de la température extérieure. De ce fait, le programme de calcul de signature détermine l'influence de la température extérieure en analysant l'évolution de la température intérieure. De même, en corrélant des nuits avec une même température extérieure mais des vitesses de vent différentes, on peut connaître l'influence de ce facteur. Par exemple, le fait que la température monte sans cause extérieure au bâtiment permet de mesurer l'impact du système de chauffage. Les fonctions et coefficients aptes à évaluer la signature thermique du bâtiment peuvent être maintenant déterminés (étape 2.4). De façon générale, l'évolution d'un paramètre qui dépend d'un minimum de valeurs représentatives d'éléments (typiquement un seul, deux au maximum) permet de calculer les coefficients d'une matrice d'état caractérisant les éléments extérieurs à la structure du bâtiment et capable d'influer sur sa température intérieure.

Puis, en effectuant des corrélations par rapport à un modèle linéaire représenté sous forme de matrices d'état par exemple, ou un modèle non linéaire, les coefficients de la matrice d'état ou de la fonction de transfert sont déterminés. Ainsi, il est possible de représenter le comportement thermique d'un logement en fonction de l'ensemble des éléments influant sur la température intérieure, que ces éléments soient internes au bâtiment (mise en marche du chauffage par exemple) ou externe (vent, pluie, ensoleillement, pression atmosphérique). Le comportement thermique est caractérisé par des matrices d'état et/ou fonctions de transfert, l'ensemble de ces matrices d'état et/ou fonctions de transfert constituant une signature thermique de la maison.

Les matrices d'état et/ou fonctions de transfert utilisent par exemple des paramètres tels que :

- Ecart maximum de température entre l'intérieur et l'extérieur produit par le système de chauffage si celui-ci fonctionne en permanence, c'est à dire au maximum,

- Produit Rth.C. Le produit Rth.C est exprimé en seconde. Rth est exprimé en °C/% et C en %.S/°C. Rth représente le coefficient de résistance globale du bâtiment. C représente la capacité thermique globale du bâtiment et notamment son inertie thermique,
- Produit Rth.C au chauffage fonction de la température extérieure (pour les chaudières à sonde de température extérieure,
- rapport exprimé en % des apports solaires en fonction de la hauteur et de la déclinaison solaire. Cette valeur exprime l'écart entre l'apport de chaleur effectuée par le système de chauffage et la chaleur fournie par le soleil,

Les équations dont les paramètres sont calculés expérimentalement permettent de déterminer la température à certains moments. Ces paramètres sont identifiés grâce à l'analyse temporelle de l'évolution des courbes de température intérieure et extérieure. Les algorithmes d'identifications de système linéaires (méthodes de STREJC ou de CSYPKIN par exemple). Les analyses statistiques sur plusieurs jours permettent de déterminer les températures critiques du système en fonction de la température extérieure, tels que :

- Calcul de la température de non-chauffe la nuit,
- Calcul de la température de non-chauffe le jour,
- Calcul de la température maximale de chauffe la nuit,
- Calcul de la température maximale de chauffe le jour ou le matin

Avantageusement, la détermination des paramètres des matrices d'état et/ou fonction de transfert peut également s'effectuer à l'aide de transformée de Fourier ou de filtres de Kalman.

L'ensemble des matrices d'état et/ou fonction de transfert, constituant autant de fonctions, ainsi que les coefficients paramétrant ces fonctions, sont rassemblés (étape 2.5) et l'ensemble constitue la signature thermique du bâtiment. L'expérimentation a montré qu'un unique modèle peut s'appliquer à tous les types de bâtiment. Le choix du modèle s'effectue principalement en fonction du nombre de paramètres disponibles, c'est à dire, le nombre d'éléments susceptibles d'influer sur la température intérieure du bâtiment (température extérieure, présence du soleil ou nuit, présence de vent, humidité, ...). Selon un premier mode de réalisation, le modèle utilisé est d'ordre 2 linéaire avec 4 paramètres principaux qui évoluent en fonction du vent et du soleil, caractérisé par l'équation suivante :

$$Y = A.X + B.U$$

Où Y est la matrice d'état de sortie de la maison (la température intérieure selon ce mode de réalisation), X représente l'état de la commande du système de chauffage et A est la matrice d'état associé au chauffage, U représente les éléments non liés à la structure du bâtiment capables d'influer sur sa température intérieure (température extérieure, vent, pluie, soleil, occupation) et B est la matrice d'état associée à ces éléments.

Selon un autre mode de réalisation plus complexe, le modèle est d'ordre 3 en intégrant d'autres paramètres tels que la température du sol et l'impact de la température du sol sur la température intérieure. Par exemple lorsqu'il fait 10°C à l'extérieur et que la température baisse à 0°C, le comportement du bâtiment le premier jour à 0°C n'est pas le même qu'au bout de 5 jours à 0°C. Cet autre mode de réalisation prend notamment en compte l'inertie thermique du bâtiment.

Le calcul de la signature thermique s'effectue en réalisant successivement les étapes suivantes :

- définition d'un modèle générique appliqué à un bâtiment, ce modèle possède des coefficients liés au bâtiment, par exemple la taille des fenêtres et la présence ou non d'une VMC,
- identification des éléments non liés à la structure du bâtiment capables d'influer sur sa température intérieure (vent, soleil, humidité...) et incorporation des paramètres de ces éléments au modèle,
- une fois les deux étapes de définition du modèle effectuées (ces étapes peuvent être faites une fois pour toute et convenir pour tous les types de bâtiment), mesures des valeurs des éléments capables d'influer sur sa température intérieure (c'est-à-dire: mesure de la température extérieure, mesure de la direction et de la vitesse du vent, mesure de l'ensoleillement, mesure de la pression atmosphérique, ...
- analyse de l'évolution des températures et détermination d'un laps de temps au cours duquel un nombre minimum de paramètres évolue (typiquement un seul paramètre). Par des méthodes de régressions linéaires, des méthodes statistiques, des méthodes d'identification ou des méthodes de traitement du signal, le système calcule l'influence de ce paramètre sur la température à l'intérieur du domicile. Ces méthodes déterminent les paramètres de filtrage et d'échantillonnage en fonction du type de bâtiment (en utilisant un formulaire rempli par ses occupants). Ainsi une maison où la température évolue très vite implique un traitement différent qu'une maison à forte inertie. Ces méthodes permettent le regroupement des valeurs d'un même paramètre pour définir une loi d'évolution par régression statistique ou régression linéaire.
- calcul des matrices A et B en fonctions des paramètres. L'équation ci-dessus est alors déterminée et constitue la signature thermique du bâtiment.

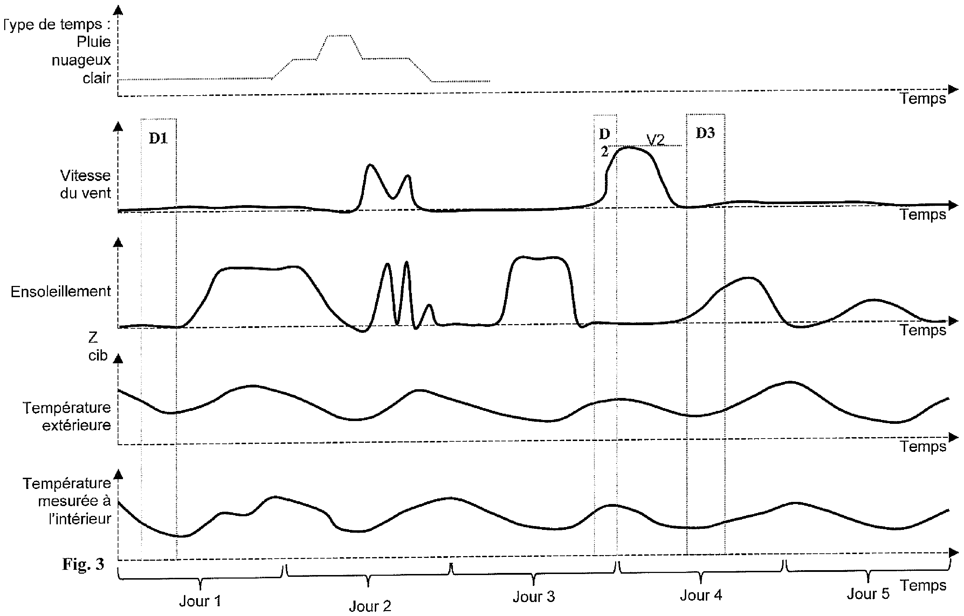

La figure 3 présente un schéma séquentiel montrant l'évolution de la température mesurée par le MTO en fonction d'éléments susceptibles d'agir sur cette évolution. L'analyse des variations simultanées entre la température mesurée et un nombre minimum de paramètres mesurés permet de modéliser l'influence de ces paramètres sur la température. Le système d'évaluation analyse l'ensemble des paramètres mesurés et détermine des scénarii d'une certaine durée au cours de laquelle il est possible de modéliser l'évolution de la température en fonction d'un nombre minimum de paramètres. L'exemple illustré montre une évolution sur cinq jours, mais l'expérimentation a montré qu'un enregistrement sur au moins 6 semaines produit une signature thermique performante.

Voici des exemples de scénarii s'exécutant pendant un laps de temps au cours duquel un nombre minimum de paramètres évolue.

- Au cours du laps de temps D1, l'ensoleillement et la vitesse du vent sont quasi nuls, seule la température extérieure varie et la température mesurée à l'intérieur varie de façon similaire. Dans la mesure où cette variation de température mesurée est constante, on peut déduire que le chauffage n'est pas mis en route, cette hypothèse est confortée par le fait que D1 se trouve en pleine nuit, typiquement une heure après le coucher du soleil et une heure avant le lever du soleil. Le programme de calcul de signature détermine à partir de la variation des deux courbes de température, un coefficient caractérisant l'influence de la température extérieure sur la température intérieure.

- Au cours d'un autre laps de temps D2, le vent se met à souffler à une vitesse V2 et l'ensoleillement est nul, la température extérieure varie très peu. L'élément prépondérant qui fait varier la température mesurée à l'intérieur est donc le vent. Dans la mesure où D2 intervient en début de nuit, typiquement pendant l'heure qui suit le coucher du soleil, on peut considérer que l'activité humaine est réduite et que le chauffage n'est pas en route. Le programme de calcul de signature détermine à partir de la variation des deux courbes de vent et de température, un coefficient caractérisant l'influence du vent et de sa vitesse sur la température intérieure.

- Le troisième laps de temps D3 est pris en milieu de journée, l'ensoleillement est croissant, le vent est nul et la température extérieure varie faiblement. L'élément prépondérant qui fait varier la température mesurée à l'intérieur est donc l'ensoleillement. Dans la mesure où D3 intervient au milieu de la journée, on peut considérer que le bâtiment est vide (c'est une maison, et c'est un jour de la semaine) et donc l'activité humaine est réduite. Le programme de calcul de signature détermine à partir de la variation des deux courbes d'ensoleillement et de température, un coefficient caractérisant l'influence du soleil sur la température intérieure.

- Selon un exemple de réalisation que l'on peut identifier au cours d'un quatrième laps de temps D4, deux paramètres varient au cours de la période de temps utilisée pour la sélection d'un modèle mathématique associé à une matrice d'état ou à une fonction de transfert et au calcul des coefficients. Par exemple, au cours de cette période, la vitesse du vent augmente de manière importante et l'ensoleillement est également croissant. La température extérieure est stable et il n'y a personne dans la maison, cette absence d'occupant est détectée par un capteur de présence. Le système d'évaluation identifie ainsi des coefficients permettant de pondérer l'influence du vent et du soleil sur l'habitat. Ce procédé est itératif, chaque fois qu'une telle situation se présente, de nouveaux coefficients sont calculés et moyennés avec les précédents. De cette façon, la précision des valeurs des paramètres peut être améliorée dans le temps.

A l'issue de cette étape, le programme fournit la signature thermique du bâtiment mais aussi des informations sur son taux d'occupation. Ainsi le programme peut produire un diagramme séquentiel montrant la présence d'occupant, et éventuellement leurs nombres au cours de la période de récupération des données. Cette information peut être très précise si le MTO est relié avec au moins un capteur de présence.

**6.3 Calcul de recommandations**

Dans un second temps, la présente invention permet de produire des recommandations pour améliorer la signature ainsi calculée pour un bâtiment déterminé, c'est à dire des actions à effectuer sur ce bâtiment pour améliorer son bilan thermique. Ces actions sont sélectionnées dans un ensemble d'actions telles que :

- isolation du plafond sous le toit,
- isolation des murs,
- isolation du mur nord,
- installation d'une VMC double flux,
- changement de la chaudière pour un modèle mieux adapté au bâtiment,...

La sélection d'une recommandation s'effectue en récupérant des données d'usage sur le bâtiment 10 (étape 2.6). Ces données d'usage informent le système sur l'occupation du bâtiment et le ressenti de ses occupants. Selon une variante, le MTO est connecté à un ou plusieurs détecteurs de présence permettant de déterminer un profil d'occupation au cours d'une semaine de préférence. Selon une autre variante, le profil d'occupation du bâtiment est récupéré par un questionnaire transmis aux occupants, les réponses servant à construire ledit profil.

Dans tous les cas, les occupants complètent le profil d'utilisation par des souhaits d'amélioration qui vont permettre d'orienter les solutions qui leur seront proposées. Ces souhaits concernent typiquement le ressenti de l'état actuel du chauffage, c'est à dire les réponses aux questions :

- « est-il suffisant ? »
- « à quels moments la température de confort est-elle atteinte?»
- « quelle est pour vous la température de confort? ».

A travers une interface réseau, ou en répondant par écrit à un questionnaire, le ou les occupants du bâtiment informent le système des réponses.

Une fois le profil d'occupation et les souhaits d'amélioration introduits dans le système, celui-ci élabore des recommandations en utilisant la signature thermique calculée à l'étape 2.5. Ces recommandations sont par exemple :

| | |
|---|---|
| augmenter la température de chauffage, | (I) |
| fermer les volets, | (II) |
| boire une boisson chaude, | (III) |
| mettre des vêtements plus chauds, | (IV) |
| isoler le toit, | (V) |
| isoler les murs. | (VI) |

Les recommandations produites dépendent d'abord du budget indiqué par les occupants. Le système comporte une matrice de choix permettant d'automatiser la production de recommandations en fonction des paramètres d'entrées.

Si le budget indiqué par les occupants est très faible, le système préconise les choix II, III et IV. Si le budget est un peu plus conséquent, le système préconise le choix I, en spécifiant que la facture de chauffage sera plus élevée. Si le budget indiqué par les occupants est important, on peut proposer des travaux (choix V, VI).

Si l'occupant privilégie les économies, les choix (V et VI) ayant un temps de retour rapide (par exemple, inférieur à 5 ans) sont recommandés. Si l'occupant privilégie son confort, les choix augmentant le confort (choix I) sont recommandés. Selon la complexité du formulaire, le choix des recommandations s'amenuise permettant ainsi de mieux les cibler.

Concernant les recommandations de travaux (choix V et VI), la sélection du type de travaux est réalisée notamment en fonction des données récupérées sur les 6 semaines précédentes.

En fonction des apports solaires et du vent au bâtiment, le système est capable de définir les orientations des murs du bâtiment dans lequel le MTO est installé ainsi qu'une part de la surface de fenêtres.

Par exemple, si des apports solaires importants sont captés le matin (et donc une élévation de la température), cela nous indique qu'une fenêtre est présente sur la façade Est. S'il n'y a pas d'apports solaires, c'est qu'il n'y a pas de fenêtres ou un masque solaire devant le logement (un immeuble ou des arbres par exemple). Grâce à la variation de la température intérieure et du produit RC en fonction de la direction du vent et de sa vitesse, le système est capable de définir si ce mur est équipé de fenêtres ou non. De même, l'évolution de la température intérieure en fonction de la hauteur solaire et de la déclinaison solaire permet de déterminer si une façade possède des masques solaires ou si elle ne dispose pas de fenêtres.

Voici une liste de recommandations proposées en fonction de l'état d'un bâtiment fourni par la signature thermique du bâtiment, et éventuellement en fonction des habitudes des occupants :

- Si les moments où la température intérieure est maximale sont en dehors des plages de présence des occupants, alors le système fournit une recommandation consistant à modifier des plages de programmation du thermostat pour y introduire les moments correspondant aux plages de présence.
- Si un ensoleillement important est prévu dans les prochaines heures (voire jours), cette information venant des prévisions météorologiques, et que la signature thermique signale qu'une façade au moins du bâtiment est sensible aux apports solaires, alors le système fournit une recommandation consistant à ouvrir les volets si l'écart entre les températures extérieure et intérieure est inférieur à un certain seuil (ce seuil est typiquement de 5°C, mais peut dépendre de la signature thermique du bâtiment).
- Si des vents importants sont prévus, cette information venant des prévisions météorologiques, et que la signature thermique indique qu'une façade est sensible aux vents, alors le système fournit une recommandation consistant à fermer les volets.
- Si l'écart entre la température intérieure et la température extérieure prévue dans les prochaines heures est supérieur à un seuil déterminé alors le système fournit une recommandation consistant à avancer le chauffage d'une durée déterminée (typiquement une heure, cette durée peut être calculée à partir de la signature thermique).
- En fonction du RC au refroidissement calculé et des questions remplies, le système fournit une recommandation consistant à effectuer des travaux apportant le meilleur confort en adéquation avec l'usage effectué. Par exemple si la valeur de RC varie fortement en fonction du vent, alors le système préconise de changer des ouvrants ou la VMC. Si le RC ne varie pas beaucoup en fonction du vent, alors le système préconise d'isoler les combles, le sol ou la toiture en fonction de l'année de construction et des travaux effectués.
- En fonction du RC au chauffage et de l'usage, le système fournit une recommandation consistant à installer un type de chauffage le plus adapté pour le confort. Par exemple, si l'usage est faible mais régulier et que le RC chauffage est élevé, alors le système préconise des solutions permettant de réduire le RC de chauffe via des radiateurs rayonnants électriques par exemple.

Les recommandations peuvent être transmises par courrier si elles concernent des travaux d'améliorations de l'habitat. Si les recommandations concernent une action à faire dans le bâtiment ou un changement affectant le comportement des occupants dans les prochaines heures, alors elles sont transmises immédiatement par courriel et/ou par messages téléphoniques. Elles peuvent être également transmises à un serveur domotique qui effectue automatiquement les actions préconisées au sein du bâtiment, telles que : ouverture/ fermeture des volets, ouverture/ fermeture des fenêtres, arrêt/marche de la VMC, modification des paramètres de programmation du thermostat, ...

**Revendications**

1. Procédé de calcul d'une signature thermique d'un bâtiment (10), comprenant des étapes concomitantes de mesure et d'enregistrement (2.1) de l'évolution de la température à l'intérieur dudit bâtiment, et de mesure et d'enregistrement (2.2) de valeurs représentatives d'éléments capables d'influer sur la température intérieure dudit bâtiment, les deux étapes s'effectuant au cours d'une durée déterminée, lesdites mesures de la température à l'intérieur dudit bâtiment et desdites valeurs représentatives d'éléments capables d'influer sur la température intérieure dudit bâtiment étant indexées à une datation au moinsjournalière ;
**caractérisé en ce qu'**il comporte une étape d'analyse (2.3) de l'évolution des mesures de température intérieure pendant une période au cours de laquelle un nombre minimal de valeurs représentatives d'éléments varient au-dessus d'un certain seuil, et une étape de calcul (2.4) de fonctions élémentaires déterminant la température intérieure en fonction desdites valeurs représentatives d'éléments, les étapes d'analyse (2.3) et de calcul (2.4) se répétant afin de prendre en compte l'ensemble des éléments, l'ensemble des fonctions élémentaires déterminant la signature thermique du bâtiment.

2. Procédé de calcul de signature thermique selon la revendication 1, **caractérisé en ce que** les éléments capables d'influer sur la température intérieure dudit bâtiment sont pris dans le groupe d'éléments composé de la température extérieure, la vitesse du vent, l'orientation du vent, l'ensoleillement, la mesure de la pression atmosphérique, le degré d'humidité, la présence d'occupants dans le bâtiment et le fonctionnement d'un système de chauffage.

3. Procédé de calcul de signature thermique selon la revendication 1 ou 2, **caractérisé en ce que** l'étape d'analyse (2.3) de l'évolution des mesures de température intérieure consiste notamment à analyser conjointement les variations de température intérieure et de température extérieure pendant une période de temps se situant en pleine nuit et au cours de laquelle les valeurs représentatives des autres éléments varient en-dessous d'un certain seuil, l'étape de calcul (2.4) déterminant à partir des variations pendant ladite période un coefficient caractérisant l'influence de la température extérieure sur la température intérieure.

4. Procédé de calcul de signature thermique selon la revendication 1 ou 2, **caractérisé en ce que** l'étape d'analyse (2.3) de l'évolution des mesures de température intérieure consiste notamment à analyser conjointement les variations de température intérieure et la vitesse du vent pendant une période de temps se situant en début de nuit et au cours de laquelle les valeurs représentatives des autres éléments varient en-dessous d'un certain seuil, l'étape de calcul (2.4) déterminant à partir des variations mesurées pendant ladite période un coefficient caractérisant l'influence du vent sur la température intérieure.

5. Procédé de calcul de signature thermique selon la revendication 1 ou 2, **caractérisé en ce que** l'étape d'analyse (2.3) de l'évolution des mesures de température intérieure consiste notamment à analyser conjointement les variations de température intérieure et l'ensoleillement pendant une période de temps se situant au milieu de la journée et au cours de laquelle les valeurs représentatives des autres éléments varient en-dessous d'un certain seuil, l'étape de calcul (2.4) déterminant à partir des variations mesurées pendant ladite période un coefficient caractérisant l'influence de l'ensoleillement sur la température intérieure.

6. Procédé de calcul de signature thermique selon la revendication 1 ou 2, **caractérisé en ce que** l'étape d'analyse (2.3) de l'évolution des mesures de température intérieure consiste notamment à analyser conjointement les variations de température intérieure, l'ensoleillement et la vitesse du vent pendant une période de temps au cours de laquelle les valeurs représentatives des autres éléments varient en-dessous d'un certain seuil et au cours de laquelle l'absence d'occupant est détectée, l'étape de calcul (2.4) déterminant à partir des variations mesurées pendant ladite période une matrice d'état caractérisant l'influence de l'ensoleillement et du vent sur la température intérieure.

7. Procédé de calcul de signature thermique selon l'une quelconque des revendications précédentes, **caractérisé en ce qu'**il comporte une étape d'introduction (2.6) de données relatives à l'usage dudit bâtiment (10) et une étape d'émission (2.7) de recommandations en fonction des données d'usages introduites, et de la signature thermique du bâtiment.

8. Procédé de calcul de signature thermique selon la revendication 7, **caractérisé en ce que** l'étape d'émission (2.7) de recommandations consiste à émettre les recommandations par courrier postal lorsque celles-ci concernent des travaux à effectuer sur ledit bâtiment.

9. Procédé de calcul de signature thermique selon la revendication 7, **caractérisé en ce que** l'étape d'émission (2.7) de recommandations consiste à émettre les recommandations par message téléphonique lorsque celles-ci concernent au moins une action à effectuer dans le bâtiment au cours des prochaines heures.

10. Procédé de calcul de signature thermique selon l'une quelconque des revendications 7 à 9, **caractérisé en ce qu'**une recommandation de remplacer au moins une plage de programmation d'un thermostat de contrôle du système de chauffage du bâtiment par une plage de présence des occupants introduite au cours de l'étape d'introduction (2.6) est émise lorsque au moins un moment où la température intérieure est maximale se situe en dehors des plages de présence des occupants.

11. Procédé de calcul de signature thermique selon l'une quelconque des revendications 7 à 9, **caractérisé en ce qu'**une recommandation de fermer les volets dudit bâtiment est émise lorsque des vents importants sont prévus dans les prochaines heures et lorsque la signature thermique dudit bâtiment indique qu'une façade est sensible aux vents.

12. Procédé de calcul de signature thermique selon l'une quelconque des revendications 7 à 9, **caractérisé en ce qu'**une recommandation consistant à avancer le chauffage d'une durée déterminée est émise lorsque l'écart entre la température intérieure et la température extérieure prévue dans les prochaines heures est supérieur à un seuil déterminé.

13. Procédé de calcul de signature thermique selon l'une quelconque des revendications 7 à 9, **caractérisé en ce qu'**une recommandation d'ouvrir les volets dudit bâtiment est émise lorsqu'un ensoleillement dépassant un certain seuil est prévu dans les prochaines heures et lorsque la signature thermique signale qu'une façade au moins du bâtiment est sensible aux apports solaires, et que l'écart entre la température extérieure et la température intérieure est inférieur à un certain seuil.

14. Serveur destiné à déterminer une signature thermique d'un local conçu pour mettre en oeuvre les étapes d'analyse (2.3) de l'évolution des mesures de température intérieure et une étape de calcul (2.4) de fonctions élémentaires selon l'une quelconque des revendications 1 à 13.

15. Produit programme d'ordinateur téléchargeable depuis un réseau de communications et/ou stocké sur un support lisible par ordinateur et/ou exécutable par une unité centrale, **caractérisé en ce qu'**il comprend des instructions de programme pour la mise en oeuvre du procédé de calcul de la signature thermique d'un bâtiment selon l'une quelconque des revendications 1 à 14.

**Patentansprüche**

1. Verfahren zur Berechnung einer Wärmesignatur eines Gebäudes (10), das gleichzeitig stattfindende Schritte zum Messen und Aufzeichnen (2.1) der Entwicklung der Temperatur im Inneren des Gebäudes sowie zum Messen und Aufzeichnen (2.2) von Werten umfasst, die Elemente darstellen, die in der Lage sind, die Innentemperatur des Gebäudes zu beeinflussen, wobei die beiden Schritte im Verlauf einer festgelegten Dauer erfolgen, wobei die Messungen der Temperatur im Inneren des Gebäudes und der Werte, die Elemente darstellen, die in der Lage sind, die Innentemperatur des Gebäudes zu beeinflussen, an eine mindestens tägliche Zeitangabe gekoppelt sind;
**dadurch gekennzeichnet, dass** es einen Schritt zum Analysieren (2.3) der Entwicklung der Messungen der Innentemperatur während eines Zeitraums, während dessen sich eine Mindestanzahl von Werten, die Elemente darstellen, über einer bestimmten Schwelle ändert, und einen Schritt zur Berechnung (2.4) von Grundfunktionen umfasst, die die Innentemperatur in Abhängigkeit von den Werten bestimmen, die Elemente darstellen, wobei sich der Analyseschritt (2.3) und Berechnungsschritt (2.4) wiederholen, damit die Gesamtheit der Elemente berücksichtigt wird, wobei die Gesamtheit der Grundfunktionen die Wärmesignatur des Gebäudes bestimmt.

2. Verfahren zur Wärmesignaturberechnung nach Anspruch 1, **dadurch gekennzeichnet, dass** die Elemente, die in der Lage sind, die Innentemperatur des Gebäudes zu beeinflussen, aus der Gruppe von Elementen bestehend aus Außentemperatur, Windgeschwindigkeit, Windrichtung, Sonneneinstrahlung, Messung des Luftdrucks, Grad der Feuchtigkeit, Anwesenheit von Bewohnern im Gebäude und Funktionalität eines Heizsystems ausgewählt werden.

3. Verfahren zur Wärmesignaturberechnung nach Anspruch 1 oder 2, **dadurch gekennzeichnet, dass** der Schritt zur Analyse (2.3) der Entwicklung des Messungen der Innentemperatur insbesondere im gemeinsamen Analysieren der Änderungen der Innentemperatur und Außentemperatur während eines Zeitraums besteht, der mitten in der Nacht liegt und während dessen sich die Werte, die die anderen Elemente darstellen, unter einer bestimmten Schwelle ändern, wobei im Berechnungsschritt (2.4) anhand von Änderungen während des Zeitraums ein Koeffizient bestimmt wird, der den Einfluss der Außentemperatur auf die Innentemperatur beschreibt.

4. Verfahren zur Wärmesignaturberechnung nach Anspruch 1 oder 2, **dadurch gekennzeichnet, dass** der Schritt zur Analyse (2.3) der Entwicklung des Messungen der Innentemperatur insbesondere im gemeinsamen Analysieren der Änderungen der Innentemperatur und der Windgeschwindigkeit während eines Zeitraums zu Beginn der Nacht und während dem sich die Werte, die die anderen Elemente darstellen, unter einer bestimmten Schwelle ändern, besteht, wobei in dem Berechnungsschritt (2.4) anhand von während des Zeitraums gemessenen Änderungen ein Koeffizient bestimmt wird, der den Einfluss des Windes auf die Innentemperatur beschreibt.

5. Verfahren zur Wärmesignaturberechnung nach Anspruch 1 oder 2, **dadurch gekennzeichnet, dass** der Schritt zur Analyse (2.3) der Entwicklung des Messungen der Innentemperatur insbesondere im gemeinsamen Analysieren der Änderungen der Innentemperatur und der Sonneneinstrahlung während eines Zeitraums mitten am Tag und während dem sich die Werte, die die anderen Elemente darstellen, unter einer bestimmten Schwelle ändern, besteht, wobei in dem Berechnungsschritt (2.4) anhand von während des Zeitraums gemessenen Änderungen ein Koeffizient bestimmt wird, der den Einfluss der Sonneneinstrahlung auf die Innentemperatur beschreibt.

6. Verfahren zur Wärmesignaturberechnung nach Anspruch 1 oder 2, **dadurch gekennzeichnet, dass** der Schritt zur Analyse (2.3) der Entwicklung der Messungen der Innentemperatur insbesondere im gemeinsamen Analysieren der Änderungen der Innentemperatur, der Sonneneinstrahlung und der Windgeschwindigkeit während eines Zeitraums besteht, während dessen sich die Werte, die die anderen Elemente darstellen, unter einer bestimmten Schwelle ändern, und während dessen die Abwesenheit von Bewohnern erfasst wird, wobei in dem Berechnungsschritt (2.4) anhand von während des Zeitraums gemessenen Änderungen eine Zustandsmatrix bestimmt wird, die den Einfluss der Sonneneinstrahlung und des Windes auf die Innentemperatur beschreibt.

7. Verfahren zur Wärmesignaturberechnung nach einem der vorhergehenden Ansprüche, **dadurch gekennzeichnet, dass** es einen Schritt zum Eingeben (2.6) von Daten zur Nutzung des Gebäudes (10) und einen Schritt zum Abgeben (2.7) von Empfehlungen in Abhängigkeit von den eingegebenen Nutzungsdaten und der Wärmesignatur des Gebäudes umfasst.

8. Verfahren zur Wärmesignaturberechnung nach Anspruch 7, **dadurch gekennzeichnet, dass** der Schritt des Abgebens (2.7) von Empfehlungen darin besteht, die Empfehlungen auf dem Postweg abzugeben, wenn sie an dem Gebäude vorzunehmende Arbeiten betreffen.

9. Verfahren zur Wärmesignaturberechnung nach Anspruch 7, **dadurch gekennzeichnet, dass** der Schritt des Abgebens (2.7) von Empfehlungen darin besteht, die Empfehlungen als telefonische Mitteilungen abzugeben, wenn sie mindestens eine Maßnahme betreffen, die während der nächsten Stunden im Gebäude vorzunehmen ist.

10. Verfahren zur Wärmesignaturberechnung nach einem der Ansprüche 7 bis 9, **dadurch gekennzeichnet, dass** eine Empfehlung zum Austauschen mindestens eines Programmierbereichs eines Reglthermostats des Heizsystems des Gebäudes durch einen Präsenzbereich der Bewohner, der während des Eingabeschritts (2.6) eingegeben wird, abgegeben wird, wenn mindestens ein Zeitpunkt, zu dem die Innentemperatur am höchsten ist, außerhalb der Präsenzbereiche der Bewohner liegt.

11. Verfahren zur Wärmesignaturberechnung nach einem der Ansprüche 7 bis 9, **dadurch gekennzeichnet, dass** eine Empfehlung zum Schließen der Fensterläden des Gebäudes abgegeben wird, wenn in den nächsten Stunden starker Wind vorhergesagt wird und wenn die Wärmesignatur des Gebäudes besagt, dass eine Fassade windanfällig ist.

12. Verfahren zur Wärmesignaturberechnung nach einem der Ansprüche 7 bis 9, **dadurch gekennzeichnet, dass** eine Empfehlung, die darin besteht, den Heizvorgang um eine bestimmte Dauer vorzuverlegen, abgegeben wird, wenn der Abstand zwischen der Innentemperatur und der für die nächsten Stunden vorhergesagten Außentemperatur höher ist als eine vorgegebene Schwelle.

13. Verfahren zur Wärmesignaturberechnung nach einem der Ansprüche 7 bis 9, **dadurch gekennzeichnet, dass** eine Empfehlung zum Öffnen der Fensterläden des Gebäudes abgegeben wird, wenn eine Sonneneinstrahlung, die eine bestimmte Schwelle überschreitet, in den nächsten Stunden vorhergesagt wird und wenn die Wärmesignatur angibt, dass mindestens eine Fassade des Gebäudes anfällig gegenüber Erwärmung durch Sonneneinstrahlung ist und wenn der Abstand zwischen der Außentemperatur und der Innentemperatur unter einer bestimmten Schwelle liegt.

14. Server zum Bestimmen einer Wärmesignatur eines Raums zum Durchführen der Schritte zur Analyse (2.3) der Entwicklung der Messungen der Innentemperatur und eines Schritts zur Berechnung (2.4) von Grundfunktionen nach einem der Ansprüche 1 und 13.

15. Computerprogrammprodukt, das aus einem Datenübertragungsnetz herunterladbar ist und/oder auf einem computerlesbaren Träger gespeichert ist und/oder von einer Zentraleinheit ausführbar ist, **dadurch gekennzeichnet, dass** es Programmanweisungen für die Durchführung des Verfahrens zur Berechnung der Wärmesignatur eines Gebäudes nach einem der Ansprüche 1 bis 14 umfasst.

**Claims**

1. Method for calculating a heat signature of a building (10), comprising the concomitant steps of measuring and recording (2.1) the development of temperature inside said building, and measuring and recording (2.2) values representative of elements able to influence the interior temperature of said building, the two steps being performed for a predefined duration, said measurements of temperature inside said building and said values representative of elements able to influence said interior temperature of said building being indexed to a dating at least daily; **characterised in that** it comprises a step of analysing (2.3) the development of the measurements of interior temperature for a period during which a minimum number of values representative of elements varies above a certain threshold, and a step of calculating (2.4) elementary functions determining the interior temperature as a function of said values representative of elements, the steps of analysis (2.3) and calculation (2.4) being repeated in order to take into account all elements, all elementary functions determining the heat signature of the building.

2. Method for calculating a heat signature according to claim 1, **characterised in that** the elements able to influence the interior temperature of said building are included in the group of elements composed of the exterior temperature, the wind speed, the wind direction, the sunshine, the atmospheric pressure measurement, the relative humidity, the presence of occupants in the building, and the functioning of a heating system.

3. Method for calculating a heat signature according to claim 1 or 2, **characterised in that** the step of analysing (2.3) the development of the measurements of interior temperature consists in particular of analysing jointly the variations in interior temperature and in exterior temperature for a time period situated in full night, during which values representative of other elements vary below a certain threshold, the calculation step (2.4) determining, from the variations during said period, a coefficient characterising the influence of the exterior temperature on the interior temperature.

4. Method for calculating a heat signature according to claim 1 or 2, **characterised in that** the step of analysing (2.3) the development of the measurements of interior temperature consists in particular of analysing jointly the variations in interior temperature and the wind speed during a time period situated at the start of night, and during which the values representative of other elements vary below a certain threshold, the calculation step (2.4) determining, from variations measured during said period, a coefficient characterising the influence of the wind on the interior temperature.

5. Method for calculating a heat signature according to claim 1 or 2, **characterised in that** the step of analysing (2.3) the development of the measurements of interior temperature consists in particular of analysing jointly the variations in interior temperature and the sunshine during a time period situated in the middle of the day, during which the values representative of other elements vary below a certain threshold, the calculation step (2.4) determining, from the variations measured during said period, a coefficient characterising the influence of sunshine on the interior temperature.

6. Method for calculating a heat signature according to claim 1 or 2, **characterised in that** the step of analysing (2.3) the development of the measurements of interior temperature consists in particular of analysing jointly the variations in interior temperature, the sunshine and the wind speed during a time period, during which the values representative of other elements vary below a certain threshold and during which the absence of occupants is detected, the calculation step (2.4) determining, from the variations measured during said period, a status matrix characterising the influence of sunshine and wind on the interior temperature.

7. Method for calculating a heat signature according to any of the preceding claims, **characterised in that** it comprises a step of introducing (2.6) data relative to usage of said building (10) and a step of issuing (2.7) recommendations as a function of the usage data introduced and the heat signature of the building.

8. Method for calculating a heat signature according to claim 7, **characterised in that** the step of issuing (2.7) recommendations consists of issuing recommendations by post when these concern work to be performed on said building.

9. Method for calculating a heat signature according to claim 7, **characterised in that** the step of issuing (2.7) recommendations consists of issuing recommendations by telephone when these concern at least one action to be performed in said building during the coming hours.

10. Method for calculating a heat signature according to any of claims 7 to 9, **characterised in that** a recommendation to replace at least one programming range of a thermostat for controlling the heating system of the building with a range of presence of occupants introduced during the introduction step (2.6), is issued when at least one moment at which the interior temperature is at a maximum is situated outside the ranges of presence of the occupants.

11. Method for calculating a heat signature according to any of claims 7 to 9, **characterised in that** a recommendation to close the shutters of said building is issued when strong winds are predicted in the coming hours and when the heat signature of said building indicates that a facade is sensitive to wind.

12. Method for calculating a heat signature according to any of claims 7 to 9, **characterised in that** a recommendation consisting of advancing the heating by a specific duration is issued when the difference between the interior temperature and the exterior temperature forecast for the coming hours is greater than a predefined threshold.

13. Method for calculating a heat signature according to any of claims 7 to 9, **characterised in that** a recommendation to open the shutters of said building is issued when sunshine exceeding a specific threshold is forecast in the coming hours and when the heat signature indicates that at least one facade of the building is sensitive to solar energy, and that the difference between the exterior temperature and the interior temperature is less than a specific threshold.

14. Server intended to determine a heat signature of a building, designed to implement the steps of analysing (2.3) the development of measurements of interior temperature and a step of calculating (2.4) elementary functions according to any of claims 1 to 13.

15. Computer program product which can be downloaded from a communications network and/or stored on a computer-legible support and/or can be executed by a central processing unit, **characterised in that** it comprises program instructions for implementing the method for calculating the heat signature of a building according to any of claims 1 to 14.

Fig. 1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0165899 A2
- FR 2506937 A1
- WO 2011117356 A1